# EUROPEAN PATENT SPECIFICATION

(11) **EP 3 170 719 B1**
(45) Date of publication and mention of the grant of the patent: **04.12.2019**
(21) Application number: 14897862.0
(22) Date of filing: 29.12.2014
(51) Int. Cl.: B62B 7/06

(54) **FOLDABLE JOINT AND BABY STROLLER**
FALTBARE VERBINDUNG UND KINDERWAGEN
ARTICULATION PLIABLE ET POUSSETTE POUR BÉBÉ

(30) Priority: 14.07.2014 CN 201410332287
(43) Date of publication of application: 24.05.2017
(73) Proprietor: Goodbaby Child Products Co., Ltd., Kunshan, Jiangsu 215331 (CN)
(72) Inventor: GAO, Xiang, Kunshan Jiangsu 215331 (CN); GU, Xiaocong, Kunshan Jiangsu 215331 (CN)
(74) Representative: Baker, Thomas Edward
(86) International application number: PCT/CN2014/095299
(87) International publication number: WO 2016/008268

(56) References cited:
- CN-A- 104 129 418
- CN-U- 202 935 408
- CN-U- 202 935 408
- CN-U- 203 544 084
- CN-U- 203 996 365
- DE-U1-202013 102 269
- DE-U1-202013 102 269
- US-A1- 2011 181 024
- US-A1- 2013 140 797

## Description

### Technical Field of the Invention

The present invention relates to a foldable joint capable of being folded and a stroller having such foldable joint.

### Background of the Invention

In the prior art, as disclosed in the patent published as CN1673003 and entitled Children Stroller, the stroller frame comprises a front wheel support, a rear wheel support and a push handle, the front wheel support, the rear wheel support and the push handle form a foldable joint, the rear end portion of the front wheel support and the front end portion of the rear wheel support are rotationally connected to each other by a pivot, and the front end portion of the rear wheel support is also rotationally connected to the front end portion of the push handle via another pivot. A first tooth member having a plurality of teeth is fixed to the rear end portion of the front wheel support, a second tooth member having a plurality of teeth is fixed to the front end portion of the push handle, and the first tooth member engages with the second tooth member. When the stroller frame is unfolded or folded, the second tooth member on the push handle may drive the first tooth member on the front wheel support to rotate such that the front wheel support follows the push handle to complete the unfolding or folding.

DE202013102269U1, on which document the preamble of claim 1 is based, relates to a hand collapsible stroller including a hinge unit, wherein the hinge unit has an upper hinge, a lower hinge, a sliding sleeve, a sliding sleeve base and a collapse operator. One end of the sliding sleeve is inserted in the sliding sleeve base and the other end is inserted in the rear foot tube. The upper joint, the lower joint, the sliding sleeve and the sliding sleeve base are connected by a positioning pin to form a unit, wherein in the upper joint and in the lower joint, mutually opposite track grooves are formed, wherein the track grooves have common intersections, and latching pins through the track grooves are secured in the sliding sleeve. The folding control includes a return spring disposed in the sliding sleeve, a pulling unit, a locking unit, wherein the drawing unit moves the sliding sleeve, whereby this is displaced, which simultaneously leads to the locking pins within the track grooves and the upper hinge and lower hinge rotate in opposite directions to either collapse or unfold the stroller.

US2011/181024A1 relates to a juvenile stroller includes a mobile base and a juvenile seat mounted on the mobile base. The mobile base includes wheels and a foldable frame carrying the juvenile seat.

CN202935408U relates to a connecting device of a foldable stroller. The connecting device comprises a base, a first joint and a second joint, wherein the first joint and the second joint are hinged onto the base. The first joint is hinged with a first connecting rod, the second joint is hinged with a second connecting rod, the other ends of the first connecting rod and the second connecting rod are hinged with a sliding block respectively, a third connecting portion is arranged at the bottom of the base, and the sliding block slides along the length direction of the third connecting portion. The first joint is provided with a first clamping groove, the second joint is provided with a second clamping groove, a clamping pin is arranged on the base, and the lower end of the clamping pin is connected with a control rod.

### Summary of the Invention

The technical problem to be solved by the present invention is to provide a foldable joint.

In order to solve the above technical problem, the technical solution employed by the present invention is defined in claim 1, which defines: A foldable joint with an unfolded position and a folded position, comprises a base rod, a first rotary rod and a second rotary rod, two end portions of an end portion of the base rod, an end portion of the first rotary rod and an end portion of the second rotary rod are rotationally connected to each other, and the rest one is rotationally connected with at least one of the two end portions, a slider is slidably arranged on the base rod, a driving part is connected to the slider, a first guide portion is arranged on the first rotary rod, a second guide portion is arranged on the second rotary rod, and the driving part is slidably fitted with the first guide portion and the second guide portion respectively; in the process of unfolding or folding the foldable joint, the driving part moves relative to the first guide portion and the second guide portion simultaneously, and the driving part moves along with the slider relative to the base rod such that the first rotary rod, the second rotary rod and the base rod are rotated relative to one another.

In some embodiments, the first guide portion forms a first guide portion projection on the base rod, the second guide portion forms a second guide portion projection on the base rod, the slider forms a slider projection on the base rod, and when the foldable joint is at the unfolded position or the folded position, the first guide portion projection and the second guide portion projection are located at two sides of the slider projection respectively.

In some embodiments, the distance between the first guide portion and a rotation center of the first rotary rod from one end to the other end of the first guide portion gets more and more short, and the first guide portion deviates from a radial direction of a circle having a rotation center of the first rotary rod as the center; the distance between the second guide portion and a rotation center of the second rotary rod from one end to the other end of the second guide portion gets more and more short, and the second guide portion deviates from a radial direction of a circle having a rotation center of the second rotary rod as the center; when the foldable joint is at the unfolded position, the driving part is located at the one end of the first guide portion and the one end of the second guide portion respectively, and when the foldable joint is at the folded position, the driving part is located at the other end of the first guide portion and the other end of the second guide portion respectively.

In some embodiments, the slider is slidably arranged on the base rod along a linear track.

In some embodiments, the slider is slidably connected to the base rod along a radial direction of a circle having a rotation center of the base rod as the center.

In some embodiments, a sliding direction of the slider corresponds to the length direction of the base rod.

In some embodiments, the end portion of the base rod, the end portion of the first rotary rod and the end portion of the second rotary rod are pivotally connected via a first pivot.

In some embodiments, the first guide portion and the second guide portion are arc-shaped respectively.

In some embodiments, the first guide portion and the second guide portion are guide slots respectively, and the driving part is inserted into the two guide slots.

In some embodiments, the first guide portion and the second guide portion are protruding ridges respectively, and two end portions of the driving part have grooves respectively, each of the grooves is slidably fitted with corresponding one of two protruding ridges.

A guide slot is opened on the slider, and the length direction of the guide slot is consistent with the sliding direction of the slider; a guide protrusion is provided on the base rod, and the guide protrusion is slidably inserted into the guide slot.

Another technical problem to be solved by the present invention is to provide a stroller.

In order to solve the above technical problem, the technical solution employed by the present invention is: a stroller comprises a foldable joint according to any one of the above embodiments, and the stroller further comprises a front wheel assembly provided at another end portion of the first rotary rod and a rear wheel assembly provided at another end portion of the base rod, and a push handle is provided at another end portion of the second rotary rod.

The scope of the present invention is defined by the claims, and is not limited to technical solutions specifically combined by the above technical features, and should encompass other technical solutions formed by any combination of the above technical features or the equivalent features thereof. For example, the technical solutions are formed by substituting between the above technical features and, but not limited to, the technical features with similar functions disclosed by the present invention.

Due to the use of the above technical solutions, the present invention has the following advantages over the prior art: the second rotary rod is rotationally folded relative to the base rod, the slider is driven to slide by the second guide portion via the driving part, and meanwhile the driving part slides relative to the first guide portion such that the first rotary rod is rotationally folded relative to the base rod, i.e., the first rotary rod, the base rod and the second rotary rod rotationally get close to one another.

### Brief Description of Drawings

Fig. 1 is a main view of a stroller frame (the stroller frame is at the unfolded position);
Fig. 2 is a main view of the stroller frame (the stroller frame is at the folded position);
Fig. 3 is an exploded view of a foldable joint (Embodiment 1);
Fig. 4 is a schematic state diagram of the foldable joint (Embodiment 1, the foldable joint is at the unfolded position);
Fig. 5 is a schematic state diagram of the foldable joint (Embodiment 1, the foldable joint is at the folded position);
Fig. 6 is an exploded view of a foldable joint (Embodiment 2);

Wherein, 1 - base rod; 11 - fixing pin; 2 - first rotary rod; 21 - first guide portion; 3 - second rotary rod; 31 - second guide portion; 4 - slider; 41 - driving part; 5 - first pivot; 6 - front wheel assembly; 7 - rear wheel assembly; 8 - push handle.

### Detailed Description of Embodiments

As shown in the figures, a foldable joint with an unfolded position and a folded position, comprises a base rod 1, a first rotary rod 2 and a second rotary rod 3, and the foldable joint further comprises a locking mechanism for locking the base rod 1, the first rotary rod 2 and the second rotary rod 3 to one another. The locking mechanism is not the key point of the present invention, and any mechanism capable of locking two or three rotary components to one another is suitable.

Two end portions of an end portion of the base rod 1, an end portion of the first rotary rod 2 and an end portion of the second rotary rod 3 are rotationally connected to each other, and the rest one is rotationally connected with at least one of the two end portions, i.e., these three end portions may be rotationally connected via a pivot, and also may be rotationally connected via two pivots. In this embodiment, the end portion of the base rod 1, the end portion of the first rotary rod 2 and the end portion of the second rotary rod 3 are pivotally connected via a first pivot 5. A rotation center mentioned hereinafter is the axis of the first pivot 5.

A slider 4 is slidably arranged on the base rod 1, a driving part 41 is connected to the slider 4, a first guide portion 21 is arranged on the first rotary rod 2, a second guide portion 31 is arranged on the second rotary rod 3, and the driving part 41 is slidably fitted with the first guide portion 21 and the second guide portion 31 respectively; in the process of unfolding or folding the foldable joint, the driving part 41 moves relative to the first guide portion 21 and the second guide portion 31 simultaneously, and the driving part 41 moves along with the slider 4 relative to the base rod 1 such that the three components, i.e. the first rotary rod 2, the second rotary rod 3 and the base rod 1 are rotated relative to one another.

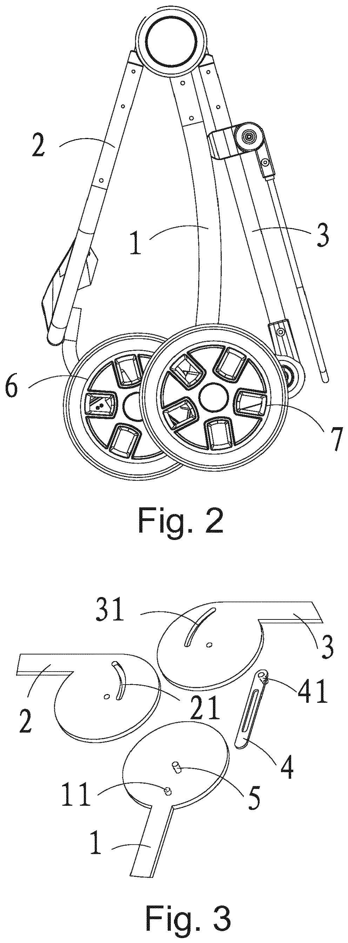

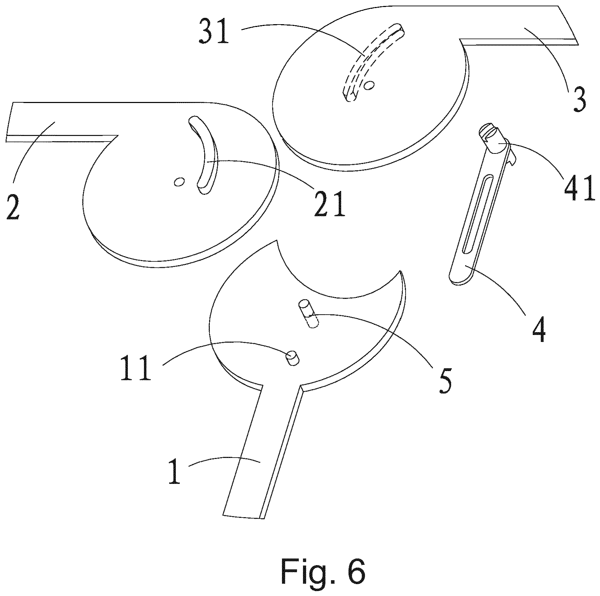

Wherein, the driving part 41 being slidably fitted with the first guide portion 21 and the second guide portion 31 respectively, may be Embodiment 1 as shown in Figs. 3 - 5, that is, both the first rotary rod 2 and the second rotary rod 3 are located at the same side of the base rod 1, the first guide portion 21 and the second guide portion 32 are guide slots respectively, and the driving part 41 is inserted into the two guide slots. Also, it may be Embodiment 2 as shown in Fig. 6, that is, the first rotary rod 2 and the second rotary rod 3 are located at two sides of the base rod 1 respectively, the first guide portion 21 and the second guide portion 31 are protruding ridges respectively, and two end portions of the driving part 41 have grooves respectively each of which is slidably fitted with corresponding one of two protruding ridges.

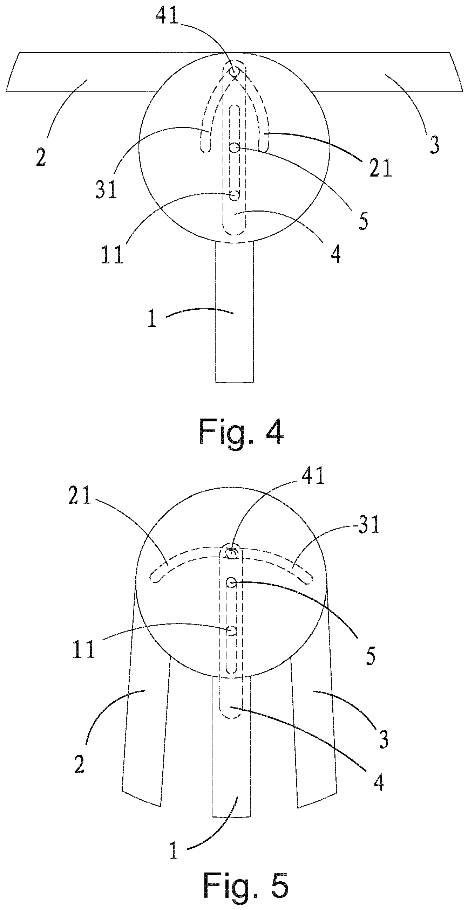

Referring to Fig. 4 and Fig. 5, the first guide portion 21 forms a first guide portion projection on the base rod 1, the second guide portion 31 forms a second guide portion projection on the base rod 1, the slider 4 forms a slider projection on the base rod 1, and when the foldable joint is at the unfolded position or the folded position, the first guide portion projection and the second guide portion projection are located at two sides of the slider projection respectively.

The distance between the first guide portion 21 and a rotation center of the first rotary rod 2 from one end to the other end of the first guide portion 21 gets more and more short, and the first guide portion 21 deviates from a radial direction of a circle having a rotation center of the first rotary rod 2 as the center; the distance between the second guide portion 31 and a rotation center of the second rotary rod 3 from one end to the other end of the second guide portion 31 gets more and more short, and the second guide portion 31 deviates from a radial direction of a circle having a rotation center of the second rotary rod 3 as the center; when the foldable joint is at the unfolded position, the driving part 41 is located at the one end of the first guide portion 21 and the one end of the second guide portion 31 respectively, and when the foldable joint is at the folded position, the driving part 41 is located at the other end of the first guide portion 21 and the other end of the second guide portion 31 respectively.

The slider 4 is slidably arranged on the base rod 1 along a linear track. A guide slot is opened on the slider 4, and the length direction of the guide slot is consistent with the sliding direction of the slider 4. A guide protrusion is provided on the base rod 1, and the guide protrusion is inserted into the Z guide slot. In this embodiment, the guide protrusion consists of the first pivot 5 and a fixing pin 11 which together limit the slider 4 to slide along a linear direction. Vice versa, i.e., a guide slot is opened on the base rod 1, and a guide protrusion is provided on the slider 4. In this embodiment, the slider 4 is slidably connected to the base rod 1 along a radial direction of a circle having a rotation center of the base rod 1 as the center.

The sliding direction of the slider 4 corresponds to the length direction of the base rod 1.

The first guide portion 21 and the second guide portion 31 are arc-shaped respectively.

The sliding direction of the slider 4, the length direction of the first guide portion 21 and the length direction of the second guide portion 31 intersect to one another.

Operating instructions: as shown in Fig. 4 and Fig. 5, during the conversion from the unfolded position to the folded position of the foldable joint, the second rotary rod 3 rotationally gets close to the base rod 1, the driving part 41 moves from the one end to the other end of the second guide portion 31, and the slider 4 slides downwardly such that the driving part 41 also from the one end to the other end of the first guide portion 21, and such that the first rotary rod 2 and the second rotary rod 3 rotationally get close to the base rod 1 synchronously; during the conversion from the folded position to the unfolded position of the foldable joint, the second rotary rod 3 rotationally gets away from the base rod 1, the driving part 41 moves from the other end to the one end of the second guide portion 31, and the slider 4 slides upwardly such that the driving part 41 also from the other end to the one end of the first guide portion 21, and such that the first rotary rod 2 and the second rotary rod 3 rotationally get away from the base rod 1 synchronously.

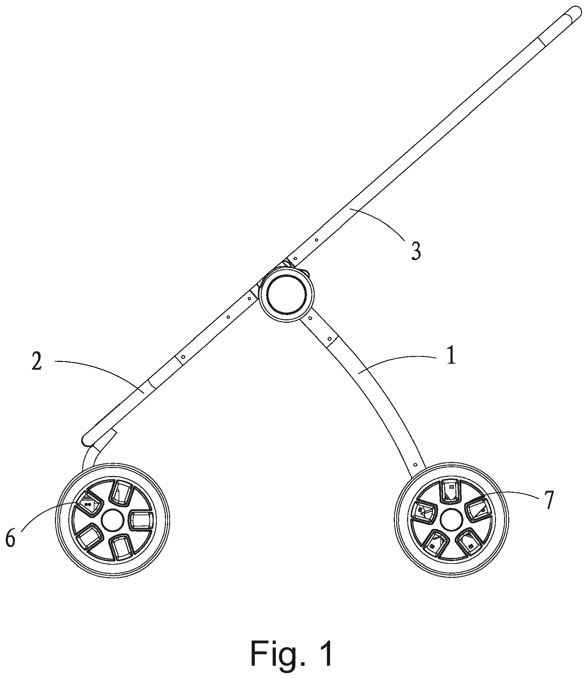

The above-mentioned foldable joint is applied to a stroller, as shown in Fig. 1 and Fig. 2, a front wheel support formed by the first rotary rod 2 is provided with a front wheel assembly, a rear wheel support formed by the base rod 1 is provided with a rear wheel assembly, and the second rotary rod 3 forms a push handle.

The above-mentioned foldable joint also may be applied to a child dining chair, such as the first rotary rod 2 forms a front support for supporting a seat mechanism, the base rod 1 forms a rear support for supporting the seat mechanism, and the second rotary rod 3 forms a backrest rod of the seat mechanism.

As above described, the present invention is explained according to the purpose thereof, but the present invention is not limited to the above-mentioned embodiments and implement methods. Various variations and implementations can be made by the practitioners of the relative technical fields within the technical concept of the present invention.

## Claims

1. A foldable joint with an unfolded position and a folded position, comprising a base rod (1), a first rotary rod (2) and a second rotary rod (3) having an end portion of the base rod (1), an end portion of the first rotary rod (2) and an end portion of the second rotary rod (3) respectively, wherein two of the end portions are rotationally connected to each other, and the third end portion is rotationally connected with at least one of the two end portions, a slider (4) is slidably arranged on the base rod (1), a driving part (41) is connected to the slider (4), a first guide portion (21) is arranged on the first rotary rod (2), a second guide portion (31) is arranged on the second rotary rod (3), and the driving part (41) is slidably fitted with the first guide portion (21) and the second guide portion (31) respectively; in the process of unfolding or folding the foldable joint, the driving part (41) moves relative to the first guide portion (21) and the second guide portion (31) simultaneously, and the driving part (41) moves along with the slider (4) relative to the base rod (1) such that the first rotary rod (2), the second rotary rod (3) and the base rod (1) are rotated relative to one another
**characterized in that**,
the foldable joint is consisted of the base rod (1), the first rotary rod (2), the second rotary rod (3), the slider (4) and the driving part (41);
wherein a guide slot is opened on the slider (4), and the length direction of the guide slot is consistent with the sliding direction of the slider (4); a guide protrusion is provided on the base rod (1), and the guide protrusion is slidably inserted into the guide slot.

2. The foldable joint according to claim 1, wherein a projection of the first guide portion (21) is formed on the base rod (1), a projection of the second guide portion (31) is formed on the base rod (1), the projection of the slider (4) is formed on the base rod (1), and when the foldable joint is at the unfolded position or the folded position, the projection of the first guide portion and the projection of the second guide portion are located at two sides of the projection of the slider respectively.

3. The foldable joint according to claim 1, wherein the distance between the first guide portion (21) and a rotation center of the first rotary rod (2) from one end to the other end of the first guide portion (21) gets more and more short, and the first guide portion (21) deviates from a radial direction of a circle having a rotation center of the first rotary rod (2) as the center; the distance between the second guide portion (31) and a rotation center of the second rotary rod (3) from one end to the other end of the second guide portion (31) gets more and more short, and the second guide portion (31) deviates from a radial direction of a circle having a rotation center of the second rotary rod (3) as the center; when the foldable joint is at the unfolded position, the driving part (41) is located at the one end of the first guide portion (21) and the one end of the second guide portion (31) respectively, and when the foldable joint is at the folded position, the driving part (41) is located at the other end of the first guide portion (21) and the other end of the second guide portion (31) respectively.

4. The foldable joint according to claim 1, wherein the slider (4) is slidably arranged on the base rod (1) along a linear track.

5. The foldable joint according to claim 1, wherein the slider (4) is slidably connected to the base rod (1) along a radial direction of a circle having a rotation center of the base rod (1) as the center.

6. The foldable joint according to claim 1, wherein a sliding direction of the slider (4) corresponds to the length direction of the base rod (1).

7. The foldable joint according to claim 1, wherein the end portion of the base rod (1), the end portion of the first rotary rod (2) and the end portion of the second rotary rod (3) are pivotally connected via a first pivot (5).

8. The foldable joint according to claim 1, wherein the first guide portion (21) and the second guide portion (31) are arc-shaped respectively.

9. The foldable joint according to claim 1, wherein the first guide portion (21) and the second guide portion (31) are guide slots respectively, and the driving part (41) is inserted into the two guide slots.

10. The foldable joint according to claim 1, wherein the first guide portion (21) and the second guide portion (31) are protruding ridges respectively, and two end portions of the driving part (41) have grooves respectively , each of the grooves is slidably fitted with corresponding one of two protruding ridges.

11. The foldable joint according to claim 1, wherein the guide protrusion is consisted of the first pivot (5) and a fixing pin (11) which together limit the slider (4) to slide along a linear direction.

12. A stroller comprising the foldable joint according to any one of claims 1 - 11, is **characterized in that**, the stroller further comprises a front wheel assembly (6) provided at another end portion of the first rotary rod (2) and a rear wheel assembly (7) provided at another end portion of the base rod (1), and a push handle (8) is provided at another end portion of the second rotary rod (3).

## Patentansprüche

1. Faltbare Verbindung mit einer entfalteten Position und einer gefalteten Position, umfassend eine Grundstange (1), eine erste Drehstange (2) und eine zweite Drehstange (3) mit
einem Endabschnitt der Grundstange (1) bzw. einem Endabschnitt der ersten Drehstange (2) bzw. einem Endabschnitt der zweiten Drehstange (3), wobei zwei der Endabschnitte drehbar miteinander verbunden sind, und der dritte Endabschnitt drehbar mit mindestens einem der beiden Endabschnitte verbunden ist, ein Schieber (4) verschiebbar auf der Grundstange (1) angeordnet ist, ein Antriebsteil (41) mit dem Schieber (4) verbunden ist, ein erster Führungsabschnitt (21) auf der ersten Drehstange (2) angeordnet ist, ein zweiter Führungsabschnitt (31) auf der zweiten Drehstange (3) angeordnet ist und das Antriebsteil (41) verschiebbar mit dem ersten Führungsabschnitt (21) bzw. dem zweiten Führungsabschnitt (31) versehen ist; bei dem Verfahren zum Entfalten oder Falten der faltbaren Verbindung bewegt sich das Antriebsteil (41) gleichzeitig relativ zum ersten Führungsabschnitt (21) und zweiten Führungsabschnitt (31), und das Antriebsteil (41) bewegt sich zusammen mit dem Schieber (4) relativ zur Grundstange (1) so, dass die erste Drehstange (2), die zweite Drehstange (3) und die Grundstange (1) relativ zueinander gedreht werden
**dadurch gekennzeichnet, dass**
die faltbare Verbindung aus der Grundstange (1), der ersten Drehstange (2), der zweiten Drehstange (3), dem Schieber (4) und dem Antriebsteil (41) besteht;
wobei ein Führungsschlitz auf dem Schieber (4) geöffnet ist und die Längsrichtung des Führungsschlitzes mit der Schieberichtung des Schiebers (4) übereinstimmt; ein Führungsvorsprung auf der Grundstange (1) vorgesehen ist und der Führungsvorsprung verschiebbar in den Führungsschlitz eingesetzt ist.

2. Faltbare Verbindung nach Anspruch 1, wobei ein Vorsprung des ersten Führungsabschnitts (21) auf der Grundstange (1) ausgebildet ist, ein Vorsprung des zweiten Führungsabschnitts (31) auf der Grundstange (1) ausgebildet ist, der Vorsprung des Schiebers (4) auf der Grundstange (1) ausgebildet ist, und wenn sich die faltbare Verbindung in der ungefalteten Position oder der gefalteten Position befindet, der Vorsprung des ersten Führungsabschnitts und der Vorsprung des zweiten Führungsabschnitts jeweils auf zwei Seiten des Vorsprungs des Schiebers angeordnet sind.

3. Faltbare Verbindung nach Anspruch 1, wobei der Abstand zwischen dem ersten Führungsabschnitt (21) und einem Drehpunkt der ersten Drehstange (2) von einem Ende zum anderen Ende des ersten Führungsabschnitts (21) immer kürzer wird und der erste Führungsabschnitt (21) von einer radialen Richtung eines Kreises mit einem Drehpunkt der ersten Drehstange (2) als Mittelpunkt abweicht; der Abstand zwischen dem zweiten Führungsabschnitt (31) und einem Drehpunkt der zweiten Drehstange (3) von einem Ende zum anderen Ende des zweiten Führungsabschnitts (31) immer kürzer wird und der zweite Führungsabschnitt (31) von einer radialen Richtung eines Kreises mit einem Drehpunkt der zweiten Drehstange (3) als Mittelpunkt abweicht; wenn sich die faltbare Verbindung in der entfalteten Position befindet, das Antriebsteil (41) an einem Ende des ersten Führungsabschnitts (21) bzw. an einem Ende des zweiten Führungsabschnitts (31) angeordnet ist, und wenn sich die faltbare Verbindung in der gefalteten Position befindet, das Antriebsteil (41) am anderen Ende des ersten Führungsabschnitts (21) bzw. des anderen Endes des zweiten Führungsabschnitts (31) angeordnet ist.

4. Faltbare Verbindung nach Anspruch 1, wobei der Schieber (4) verschiebbar auf der Grundstange (1) entlang einer geradlinigen Schiene angeordnet ist.

5. Faltbare Verbindung nach Anspruch 1, wobei der Schieber (4) verschiebbar mit der Grundstange (1) entlang einer radialen Richtung eines Kreises mit einem Drehpunkt der Grundstange (1) als Mittelpunkt verbunden ist.

6. Faltbare Verbindung nach Anspruch 1, wobei eine Schieberichtung des Schiebers (4) der Längsrichtung der Grundstange (1) entspricht.

7. Faltbare Verbindung nach Anspruch 1, wobei der Endabschnitt der Grundstange (1), der Endabschnitt der ersten Drehstange (2) und der Endabschnitt der zweiten Drehstange (3) über einen ersten Drehzapfen (5) schwenkbar verbunden sind.

8. Faltbare Verbindung nach Anspruch 1, wobei der erste Führungsabschnitt (21) und der zweite Führungsabschnitt (31) jeweils bogenförmig sind.

9. Faltbare Verbindung nach Anspruch 1, wobei der erste Führungsabschnitt (21) und der zweite Führungsabschnitt (31) jeweils Führungsschlitze sind und das Antriebsteil (41) in die beiden Führungsschlitze eingesetzt ist.

10. Faltbare Verbindung nach Anspruch 1, wobei der erste Führungsabschnitt (21) und der zweite Führungsabschnitt (31) jeweils vorstehende Stege sind und zwei Endabschnitte des Antriebsteils (41) jeweils Nuten aufweisen, wobei jede der Nuten verschiebbar mit einem entsprechenden von zwei vorstehenden Stegen versehen ist.

11. Faltbare Verbindung nach Anspruch 1, wobei der Führungsvorsprung aus dem ersten Drehpunkt (5) und einem Fixierstift (11) besteht, die zusammen den Schieber (4) begrenzen, um entlang einer geraden Richtung zu gleiten.

12. Kinderwagen, der die faltbare Verbindung nach einem der Ansprüche 1-11 umfasst, **dadurch gekennzeichnet, dass** der Kinderwagen ferner eine Vorderradanordnung (6), die an einem anderen Endabschnitt der ersten Drehstange (2) vorgesehen ist, und eine Hinterradanordnung (7), die an einem anderen Endabschnitt der Basisstange (1) vorgesehen ist, umfasst und ein Schiebegriff (8) an einem anderen Endabschnitt der zweiten Drehstange (3) vorgesehen ist.

## Revendications

1. Articulation pliable ayant une position dépliée et une position pliée, comprenant une tige de base (1), une première tige rotative (2) et une seconde tige rotative (3) ayant
une partie d'extrémité de la tige de base (1), une partie d'extrémité de la première tige rotative (2) et une partie d'extrémité de la seconde tige rotative (3) respectivement, deux parmi les parties d'extrémité étant reliées en rotation les unes aux autres, et la troisième partie d'extrémité étant raccordée en rotation à au moins l'une des deux parties d'extrémité, une pièce coulissante (4) étant agencée de manière coulissante sur la tige de base (1), une partie d'entraînement (41) étant raccordée à la pièce coulissante (4), une première partie de guidage (21) étant agencée sur la première tige rotative (2), une seconde partie de guidage (31) étant agencée sur la seconde tige rotative (3) et la partie d'entraînement (41) étant montée coulissante avec la première partie de guidage (21) et la seconde partie de guidage (31) respectivement ; au cours du processus de dépliage ou de pliage de l'articulation pliable, la partie d'entraînement (41) se déplace par rapport à la première partie de guidage (21) et à la seconde partie de guidage (31) en même temps, et la partie d'entraînement (41) se déplace conjointement avec la pièce coulissante (4) par rapport à la tige de base (1) de telle sorte que la première tige rotative (2), la seconde tige rotative (3) et la tige de base (1) soient mises en rotation les unes par rapport aux autres ;
**caractérisée en ce que**
l'articulation pliable est composée de la tige de base (1), de la première tige rotative (2), de la seconde tige rotative (3), de la pièce coulissante (4) et de la partie d'entraînement (41) ;
dans laquelle une fente de guidage est ouverte sur la pièce coulissante (4) et la direction longitudinale de la fente de guidage est compatible avec la direction de coulissement de la pièce coulissante (4) ; une saillie de guidage est ménagée sur la tige de base (1) et la saillie de guidage est insérée de manière coulissante dans la fente de guidage.

2. Articulation pliable selon la revendication 1, dans laquelle une projection de la première partie de guidage (21) est formée sur la tige de base (1), une projection de la seconde partie de guidage (31) est formée sur la tige de base (1), la projection de la pièce coulissante (4) est formée sur la tige de base (1) et, lorsque l'articulation pliable se trouve à la position dépliée ou à la position pliée, la projection de la première partie de guidage et la projection de la seconde partie de guidage sont situées sur deux côtés de la projection de la pièce coulissante respectivement.

3. Articulation pliable selon la revendication 1, dans laquelle la distance entre la première partie de guidage (21) et un centre de rotation de la première tige rotative (2) d'une extrémité à l'autre extrémité de la première partie de guidage (21) devient de plus en plus courte et la première partie de guidage (21) s'écarte d'une direction radiale d'un cercle ayant un centre de rotation de la première tige rotative (2) comme centre ; la distance entre la seconde partie de guidage (31) et un centre de rotation de la seconde tige rotative (3) d'une extrémité à l'autre extrémité de la seconde partie de guidage (31) devient de plus en plus courte et la seconde partie de guidage (31) s'écarte d'une direction radiale d'un cercle ayant un centre de rotation de la seconde tige rotative (3) comme centre ; lorsque l'articulation pliable se trouve à la position dépliée, la partie d'entraînement (41) est située au niveau de l'une des extrémités de la première partie de guidage (21) et de l'une des extrémités de la seconde partie de guidage (31) respectivement et, lorsque l'articulation pliable se trouve à la position pliée, la partie d'entraînement (41) est située au niveau de l'autre extrémité de la première partie de guidage (21) et de l'autre extrémité de la seconde partie de guidage (31) respectivement.

4. Articulation pliable selon la revendication 1, dans laquelle la pièce coulissante (4) est agencée de manière coulissante sur la tige de base (1) le long d'une piste linéaire.

5. Articulation pliable selon la revendication 1, dans laquelle la pièce coulissante (4) est raccordée de manière coulissante à la tige de base (1) le long d'une direction radiale d'un cercle ayant un centre de rotation de la tige de base (1) comme centre.

6. Articulation pliable selon la revendication 1, dans laquelle une direction de coulissement de la pièce coulissante (4) correspond à la direction longitudinale de la tige de base (1).

7. Articulation pliable selon la revendication 1, dans laquelle la partie d'extrémité de la tige de base (1), la partie d'extrémité de la première tige rotative (2) et la partie d'extrémité de la seconde tige rotative (3) sont raccordées de manière pivotante par le biais d'un premier pivot (5).

8. Articulation pliable selon la revendication 1, dans laquelle la première partie de guidage (21) et la seconde partie de guidage (31) ont respectivement la forme d'un arc.

9. Articulation pliable selon la revendication 1, dans laquelle la première partie de guidage (21) et la seconde partie de guidage (31) sont des fentes de guidage respectivement et la partie d'entraînement (41) est insérée dans les deux fentes de guidage.

10. Articulation pliable selon la revendication 1, dans laquelle la première partie de guidage (21) et la seconde partie de guidage (31) sont des crêtes saillantes respectivement et deux parties d'extrémité de la partie d'entraînement (41) comportent respectivement des rainures, chacune des rainures est montée coulissante avec une crête saillante correspondante des deux crêtes saillantes.

11. Articulation pliable selon la revendication 1, dans laquelle la saillie de guidage est composée du premier pivot (5) et d'une broche de fixation (11) qui, ensemble, empêchent la pièce coulissante (4) de coulisser le long d'une direction linéaire.

12. Poussette comprenant l'articulation pliable selon l'une quelconque des revendications 1 à 11, est **caractérisée en ce que** la poussette comprend en outre un ensemble roue avant (6) disposé au niveau d'une autre partie d'extrémité de la première tige rotative (2) et un ensemble roue arrière (7) disposé au niveau d'une autre partie d'extrémité de la tige de base (1) et une poignée de poussée (8) est disposée au niveau d'une autre partie d'extrémité de la seconde tige rotative (3).
